Europäisches Patentamt

European Patent Office

Office européen des brevets

(11) Veröffentlichungsnummer: **0 401 812**
**A1**

## (12) EUROPÄISCHE PATENTANMELDUNG

(21) Anmeldenummer: **90110757.3**

(22) Anmeldetag: **07.06.90**

(51) Int. Cl.5: **A23N 12/02, B03B 5/56**

(30) Priorität: **08.06.89 DE 3918671**

(43) Veröffentlichungstag der Anmeldung:
**12.12.90 Patentblatt 90/50**

(84) Benannte Vertragsstaaten:
**DE FR IT NL SE**

(71) Anmelder: **Gerlach, Kay, Dipl.-Ing.**
**Eberhorst 26**

**D-2730 Zeven(DE)**

(72) Erfinder: **Gerlach, Kay, Dipl.-Ing.**
**Eberhorst 26**
**D-2730 Zeven(DE)**

(74) Vertreter: **MEISSNER, BOLTE & PARTNER**
**Hollerallee 73**
**D-2800 Bremen 1(DE)**

(54) Verfahren und Vorrichtung zur Aufbereitung von Hackfrüchten.

(57) Bei der Aufbereitung von in Schwemmwasser geführten Hackfrüchten, nämlich der zuerst erfolgenden Trennung der Hackfrüchte von mitgeführten Feststoffen (Steine, Kraut, Sand etc.) und der anschließenden Hauptwäsche, ist es erforderlich, vor der Hauptwäsche die Hackfrüchte von dem Schwemmwasser zu trennen.

Erfindungsgemäß erfolgt eine Trennung der Hackfrüchte vom Schwemmwasser dadurch, daß die Hauptwäsche auf einem Niveau oberhalb des Schwemmwasserpegels 47 durchgeführt wird. Zu diesem Zweck sind vorrichtungsmäßig ein Steinefänger (10) und ein Trommelwäscher (11) zusammengefaßt, wobei eine gemeinsame Aufbereitungstrommel (20) aus einer Feststoffangtrommel (27) mit einer gleichachsig daran anschließenden im Durchmesser verringerten Waschtrommel (28) ausgebildet ist. Es ist so eine einfache und wirksame Trennung der Hackfrüchte vom Schwemmwasser unter Zuhilfenahme einer kompakten Vorrichtung möglich.

Das erfindungsgemäße Verfahren und die entsprechende Vorrichtung eignet sich besonders zum Aufbereiten von Kartoffeln, Karotten, Sellerie, Zwiebeln, Topinambur und weiteren Früchten dieser Art.

Fig.1

EP 0 401 812 A1

## Verfahren und Vorrichtung zur Aufbereitung von Hackfrüchten

Die Erfindung betrifft ein Verfahren zur Aufbereitung von Hackfrüchten gemäß dem Oberbegriff des Anspruchs 1 und eine entsprechende Vorrichtung gemäß dem Oberbegriff des Anspruchs 7.

Bei Aufbereitung von Hackfrüchten (Kartoffeln, Karotten, Zwiebeln, Rüben etc.) geht es darum, die vom Feld mit den Hackfrüchten angelieferten Nebenprodukte, nämlich Feststoffe wie z.B. Steine, Sand, Kraut oder dergleichen, zunächst von den Hackfrüchten zu trennen und diese dann zu waschen. Insbesondere der Trennprozeß, also die Feststoffabscheidung, erfolgt unter Verwendung von Schwemmwasser als Fördermedium für die Hackfrüchte und die Feststoffe.

Es hat sich gezeigt, daß hiermit in einfacher Weise ein schonender und kostengünstiger Transport der Hackfrüchte mit den Feststoffen zu den einzelnen Aufbereitungsstationen erfolgen kann.

Das üblicherweise im Kreislauf geführte Schwemmwasser muß für die einzelnen Aufbereitungsschritte entsprechend dosiert werden. Bei der nach dem Auftriebsprinzip arbeitenden Feststoffabscheidung ist eine einen ausreichenden Auftrieb der Hackfrüchte und Feststoffe gewährleistende Schwemmwassermenge erforderlich. Demgegenüber erfolgt die Hauptwäsche vorzugsweise ohne das Vorhandensein von Schwemmwasser, damit bei der Berieselung der Hackfrüchte mit reinem Wasser im Schwemmwasser mitgeführten feinen Bestandteile (Sand etc.) die Waschwirkung nicht beeinträchtigen können. Nach einem bekannten Aufbereitungsverfahren für Hackfrüchte ist es erforderlich die Feststoffabscheidung so weit von der Hauptwäsche zu trennen, daß zwischen diesen Behandlungsstufen eine Schwemmwasserabfuhr möglich ist. Dies hat einerseits den Nachteil, daß lange Transportwege erforderlich sind, während andererseits der Weitertransport der Hackfrüchte zur Hauptwäsche nach dem Abscheiden des Schwemmwassers nicht mehr in die Hackfrüchte schonender Weise durch flüssige Förderung erfolgen kann.

Der Erfindung liegt die Aufgabe zugrunde, ein schonendes Verfahren zur Aufbereitung von Hackfrüchten und eine entsprechende kompakte Vorrichtung zu schaffen.

Zur Lösung dieser Aufgabe weist das erfindungsgemäße Verfahren die Merkmale des Anspruchs 1 auf. Die Hauptwäsche wird dadurch, daß sie oberhalb des Schwemmwasserpegels durchgeführt wird, vom Schwemmwasser nicht mehr beeinflußt. Es spielt demnach keine Rolle mehr ob im Bereich ss der Hauptwäsche das Schwemmwasser aus dem Schwemmkanal schon ganz oder teilweise abgeschieden ist, da der Pegel des Schwemmstroms - wie hoch er im Bereich der Hauptwäsche auch immer sein mag - keinen Einfluß auf die zu waschenden Hackfrüchte mehr nehmen kann. Deswegen ist es möglich, die Hauptwäsche im unmittelbaren Anschluß an die Feststoffabscheidung vorzunehmen.

In Weiterbildung des Verfahrens wird der Schwemmwasserpegel in Abhängigkeit vom Niveau der Hauptwäsche derart festgelegt, daß mindestens an einem Abfluß bzw. Überlauf durch ein Wehr oder dergleichen eine den Schwemmwasserpegel entsprechende Schwemmwasserablaufhöhe eingestellt wird. So kann in einfacher Weise der Schwemmstrompegel auf einem sowohl die Feststoffabscheidung als auch die Hauptwäsche optimal ermöglichendem Niveau gehalten werden.

Damit die im Kreislauf geführte Schwemmwassermenge nahezu konstant bleibt, muß die mit den Hackfrüchten aus der Hauptwäsche ausgetragene Haftwassermenge zugeführt werden. Dies geschieht dadurch daß die der Hauptwäsche zugeführte Berieselungswassermenge mindestens der Haftwassermenge entspricht. Üblicherweise ist die zugeführte Berieselungswassermenge größer als die abgeführte Haftwassermenge, so daß die überschüssige Wassermenge, nämlich eine Differenzwassermenge, unabhängig vom Schwemmwasserkreislauf separat abgeführt werden muß, damit der vorgesehene Schwemmwasserpegel nahezu konstant bleibt. Dieses geschieht auch durch den Überlauf bzw. das Wehr.

Die zur Lösung der Aufgabe dienende Vorrichtung weist die Merkmale des Anspruchs 7 auf. Dadurch, daß im Vergleich zum Abscheideorgan das Hauptwaschorgan aus dem Schwemmwasser heraustaucht, läßt sich eine wirkungsvolle Hauptwäsche ohne eine Änderung des Schwemmwasserpegels durchführen, wobei im Bereich des Hauptwaschorgans im wesentlichen nur die zu waschenden Hackfrüchte vorliegen, also vom feine Bestandteile, beispielsweise Sandpartikelchen, mitführenden Schwemmstrom, der die Reinigungswirkung negativ beeinflussen würde, getrennt sind.

Gemäß einer bevorzugten Weiterbildung der erfindungsgemäßen Vorrichtung sind das Abscheideorgan und das Hauptwaschorgan apparativ zusammengefaßt. Dazu verfügen sie zweckmäßigerweise über eine gemeinsame Aufbereitungstrommel, die aus einer Feststoffangtrommel und einer in Fließrichtung des Schwemmwassers sich daran anschließenden Waschtrommel zusammensetzt. Durch die so erfolgte Verbindung der Feststoffangtrommel mit der Waschtrommel entsteht eine äußerst kompakte Vorrichtung bei der nennenswerte Förderstrecken zwischen dem Abscheideorgan und dem Hauptwaschorgan sich erübrigen.

Zweckmäßigerweise liegen die Feststoffangtrommel und die damit in Verbindung stehende Waschtrommel auf einer gemeinsamen, vorzugsweise horizontalen Drehachse, wobei die Waschtrommel einen kleineren Durchmesser als die Feststofffangtrommel aufweist. Dadurch kann bei entsprechendem Durchmesserverhältnis zwischen der Feststoffangtrommel einerseits und der Waschtrommel andererseits auf einfache Weise erreicht werden daß bei ausreichender Eintauchtiefe der Feststoffangtrommel in das Schwemmwasser die Waschtrommel sich außerhalb desselben befindet, und zwar bei im Vergleich zu der Feststoffangtrommel unverändertem Schwemmwasserpegel unter der Waschtrommel.

Zwischen der Feststoffangtrommel und der im Durchmesser kleineren Waschtrommel ist ein kegelstumpfförmiger Übergang vorgesehen. Dieser verfügt zweckmäßigerweise über Transportschaufeln, durch die die Hackfrüchte der im Durchmesser verglichen zur Feststoffangtrommel kleineren Waschtrommel zuführbar sind. Dieses ist deswegen erforderlich, weil die Waschtrommel aus dem Schwemmwasser heraustaucht, also zur Waschtrommel hin zumindest im Endbereich des sich kegelstumpfförmig verjüngenden Übergangsstutzens keine hydraulische Förderung der Hackfrüchte durch das Schwemmwasser mehr erfolgt. Im Bereich der Waschtrommel, in der ebenfalls keine hydraulische Förderung der Hackfrüchte mehr erfolgt, schieben die neu der Waschtrommel zugeführ ten Hackfrüchte die sich bereits in derselben befindlichen Hackfrüchte allmählich zur endseitigen Öffnung der Waschtrommel heraus. Gegebenenfalls können zur Unterstützung dieser Förderung innerhalb der Waschtrommel weitere Förderorgane, beispielsweise am Innenmantel der Waschtrommel angeordnete Schnecken angeordnet sein. Auch ist es denkbar, die Waschtrommel zu ihrer endseitigen Öffnung hin schräg verlaufen zu lassen, sei es durch eine leicht geneigte Drehachse oder durch einen kegelförmig ausgebildeten Mantel der Waschtrommel.

Die gesamte Aufbereitungstrommel, also sowohl die Feststoffangtrommel als auch die Waschtrommel, sind nach einem weiteren Vorschlag der Erfindung in einer gemeinsamen, oben offenen Wanne drehbar gelagert angeordnet. Diese Wanne ist zweckmäßigerweise durch vorzugsweise eine größenmäßige Anpassung an die kleinere Waschtrommel unterteilt in eine dieser zugeordneten Waschwanne und einer Feststoffwanne im Bereich der Feststoffangtrommel. Zweckmäßigerweise ist die Waschwanne gegenüber der Feststoffwanne hochversetzt und/oder mit einer zur Feststofftrommel weisenden Trennwand versehen, wodurch sich im Bereich der Feststoffwanne ansammelnde feine Feststoffe, beispielsweise Sand, nicht in die Waschwanne gelangen können.

Der Waschwanne ist mindestens eine Abflußöffnung für das im Kreislauf zu führende Schwemmwasser zugeordnet. Diese Ablauföffnung ist vorzugsweise mit einem verstellbaren Wehr zur Festlegung des Schwemmstoffpegels versehen. Alternativ kann die Abflußöffnung aber durch einen Drosselschieber im Querschnitt veränderlich sein, so daß durch diese nur eine bestimmte Schwemmwassermenge pro Zeiteinheit abgeführt werden kann.

Weiterhin ist nach einer bevorzugten Weiterbildung der Erfindung der Waschwanne ein zweiter Ablauf, nämlich eine Überlauföffnung zugeordnet. Diese dient insbesondere bei einer mit einer Durchflußdrossel versehenen Abflußöffnung dazu, eine durch das Berieselungswasser im Bereich der Waschtrommel zugeführte überschüssige Differenzwassermenge abzuführen, damit der vorgesehene Schwemmwasserpegel in der Vorrichtung nahezu unverändert bleibt. Zu diesem Zweck ist zumindest die Überlauföffnung mit einem verstellbaren Wehr versehen. so daß nur bei über den Sollpegel steigendem Schwemmwasserpegel durch die Überlauföffnung eine entsprechende Differenzwassermenge dem Schwemmwasserkreislauf entnommen wird. Diese Differenzwassermenge kann den im Bereich der Feststoffangtrommel abgeschiedenen Feststoffbestandteilen zugeführt werden, jedoch alternativ nach einer gegebenenfalls zwischendurch erfolgenden Feinteileabscheidung auch wieder als Berieselungswasser verwendet werden.

Das erfindungsgemäße Verfahren und zwei bevorzugte Ausführungsbeispiele der Vorrichtung werden nachfolgend anhand der Zeichnung näher erläutert. In dieser zeigen:

Fig. 1 eine schematisch dargestellte Seitenansicht der Vorrichtung (erstes Ausführungsbeispiel),

Fig. 2 eine vergrößert dargestellte Seitenansicht der Vorrichtung gemäß der Fig. 1,

Fig. 3 eine Draufsicht auf die in der Fig. 2 dargestellte Vorrichtung,

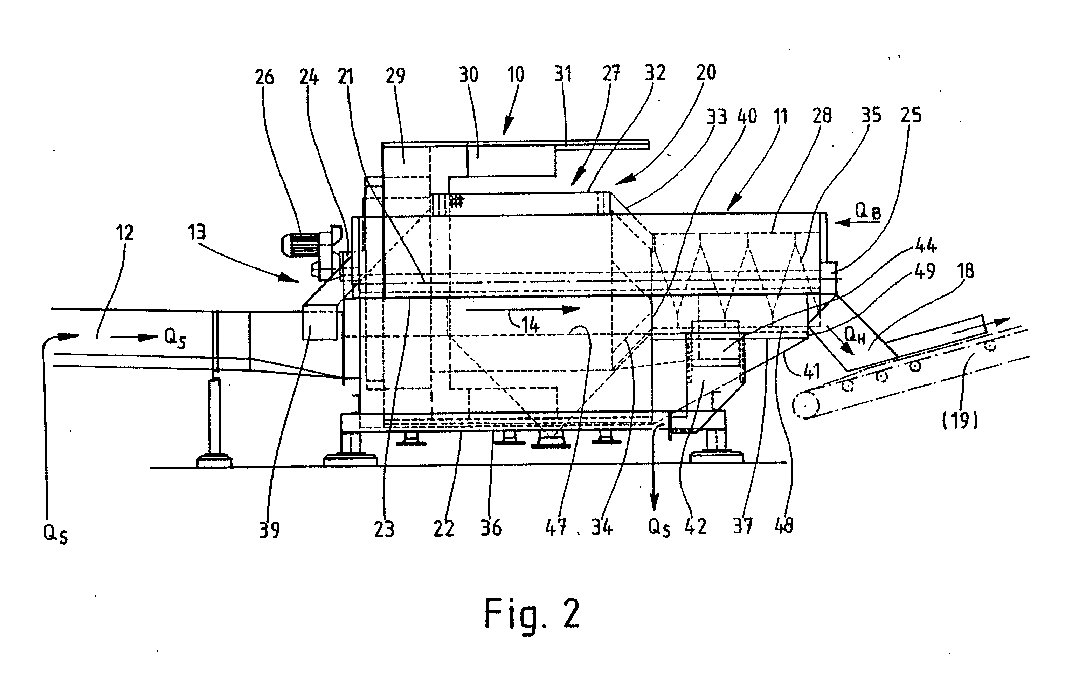

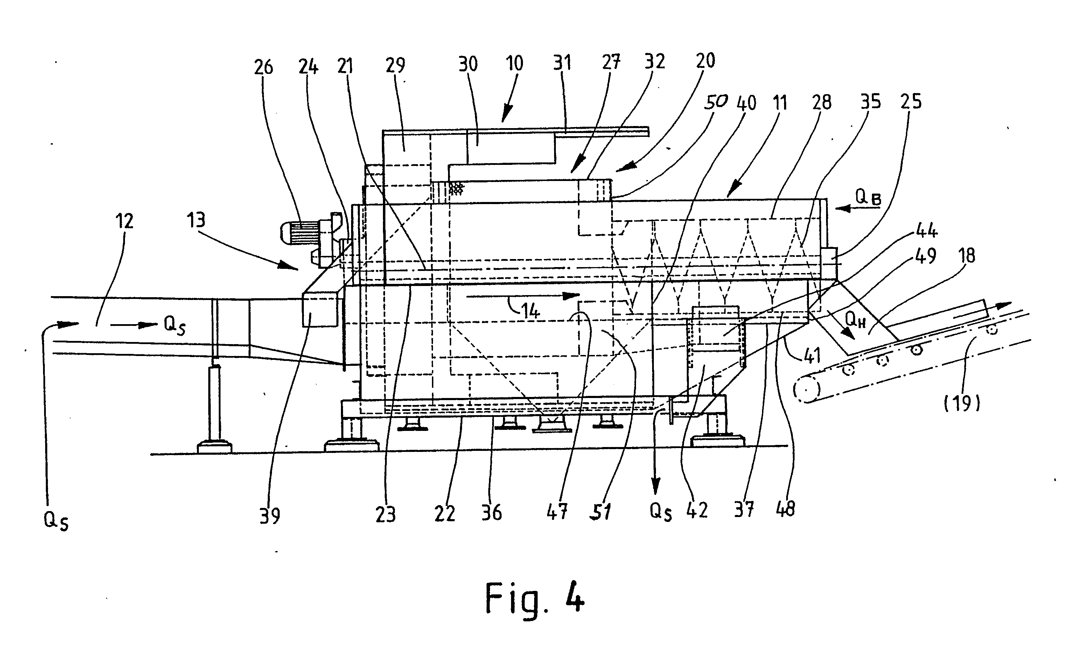

. Fig. 4 eine vergrößert dargestellte Seitenansicht der Vorrichtung analog zur Fig. 2 (zweites Ausführungsbeispiel) und

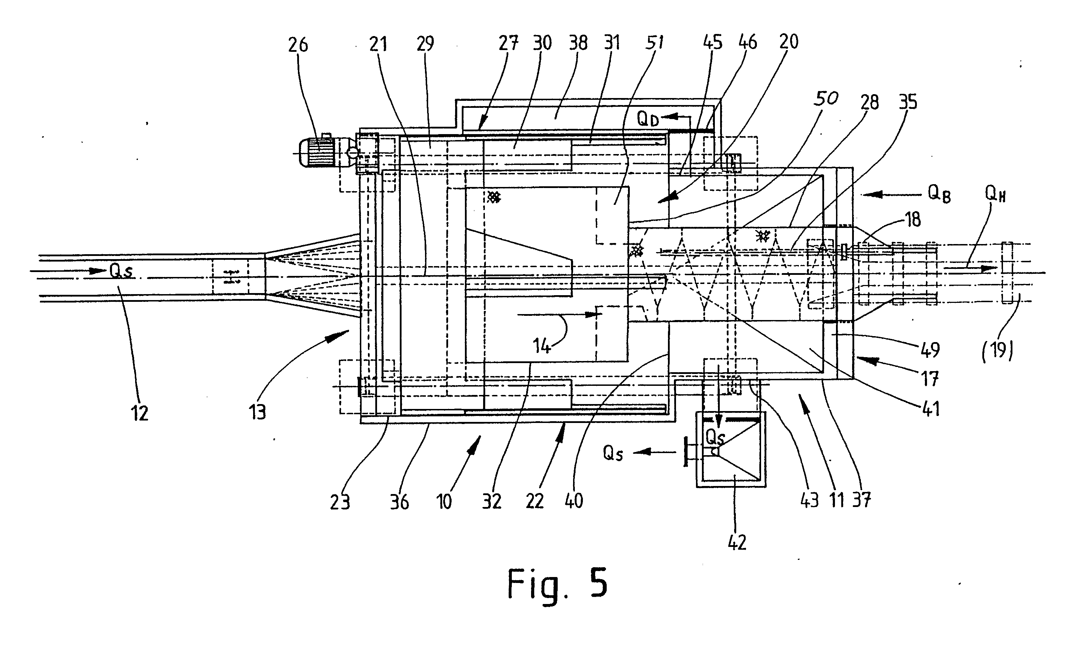

Fig. 5 eine Draufsicht auf die in der Fig. 4 dargestellte Vorrichtung.

Bei den hier gezeigten Vorrichtungen handelt es sich um Anlagen zur Aufbereitung von Kartoffeln, in denen diese vom Feld oder einem Zwischenlager kommend von anhaftenden Feststoffen, beispielsweise Steine, Kraut, Sand etc. getrennt und anschließend (end-)gewäschen werden. Dazu sind die hier gezeigten Vorrichtungen auf dem Betriebshof einer kartoffelverarbeitenden Fabrik angeordnet.

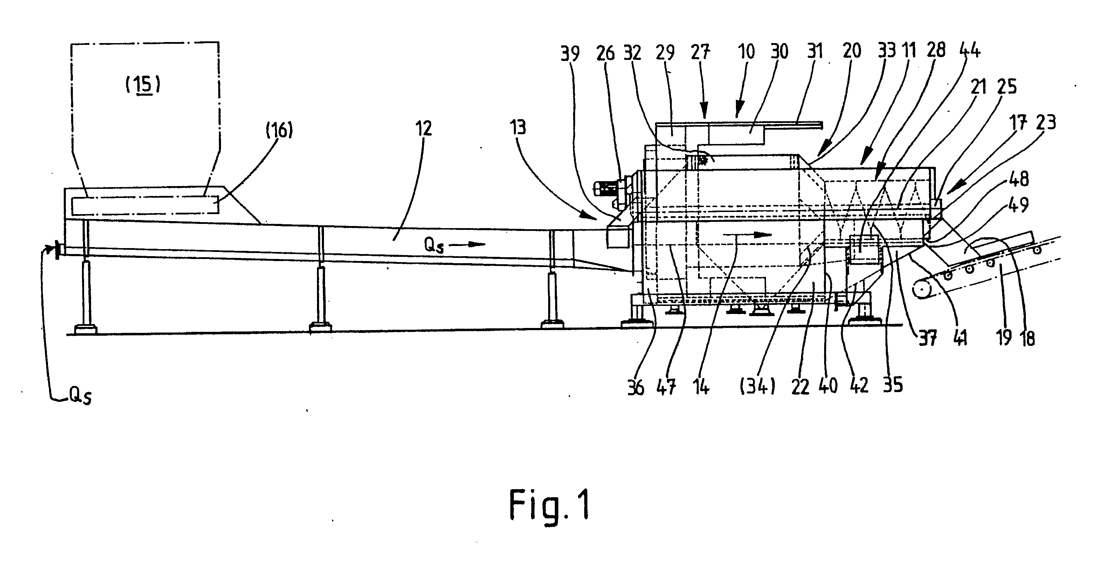

Bei Vorrichtungen nach dem ersten Ausführungsbeispiel der Erfindung (Fig. 1 bis 3) sind zusammengefaßt ein Feststoffabscheideorgan in Form eines Steinefängers 10 und ein Hauptwaschorgan, nämlich ein Trommelwäscher 11. Durch die Vorrichtung führt ein Schwemmwasserstrom. Dieser wird durch einen Schwemmkanal 12 an die Vorrichtung, nämlich einer Eintrittsseite 13 des Steinefängers 10 herangeführt. Der Schwemmstrom fließt dann weiter in Richtung des Pfeils 14 durch den Steinefänger 10 in den Bereich des Trommelwäschers 11 (Fig. 1).

Am Beginn des Schwemmkanals 12 befindet sich im gezeigten Ausführungsbeispiel ein andeutungsweise dargestellter Kartoffelbunker 15 mit einem darunter angeordneten Abzugsband 16, durch das die Kartoffeln zusammen mit anhaftenden Feststoffen, beispielsweise Sand Steine, Kraut etc., in den Schwemmwasserstrom, nämlich den Schwemmkanal 12, gelangen. Die Aufgabe der Kartoffeln mit anhaftenden Feststoffen kann jedoch auch anderweitig erfolgen. Die an der Austrittsseite 17 der Vorrichtung den Trommelwäscher 11 verlassenden aufbereiteten Kartoffeln gelangen im gezeigten Ausführungsbeispiel über eine Rutsche 18 auf ein hier nur andeutungsweise dargestelltes Förderband 19 zur entsprechenden Weiterverarbeitung (Fig. 1).

Gebildet ist die Vorrichtung aus einer Aufbereitungstrommel 20, die um eine etwa horizontale Längsmittelachse 21 drehbar teilweise eingetaucht in einer ortsfesten Wanne 22 gelagert ist. Die Wanne 22 ist an ihrer Oberlage vollständig offen und endet etwas oberhalb der Aufbereitungstrommel 20. Letztere ragt also teilweise aus der Wanne 22 heraus. Gegenüberliegende Enden der Aufbereitungstrommel 20 sind gelagert an auf dem oberen Rand 23 der Wanne 22 befestigten Lagerböcken 24 bzw. 25. Dem an der Eintrittsseite 13 des Steinefängers 10 angeordneten Lagerbock 24 ist eine Motor/Getriebeeinheit 26 zum drehenden Antrieb der Aufbereitungstrommel 20 zugeordnet.

Die Aufbereitungstrommel 20 umfaßt erfindungsgemäß eine Feststoffangtrommel 27 und eine in Schwemmstromrichtung 14 dahinterliegend gleichachsig angeordnete Waschtrommel 28.

Die Feststoffangtrommel 27 verfügt über einen der Eintrittsseite 13 zugeordneten Steinefangring 29, mit mehreren am Umfang desselben gleichmäßig verteilt angeordnete Schöpftaschen 30 zur Erzeugung einer Auftriebsströmung im Steinefangring 29. Weiterhin sind am Außenumfang des Steinefangrings über die gesamte Länge der Feststoffangtrommel 27 verlaufende Abstreifer 31 gleichmäßig verteilt angeordnet. Schließlich verfügt die Feststoffangtrommel 27 über eine zylindrische Siebtrommel 32 mit einem gelochten Mantel, die in Schwemmstromrichtung 14 sich an den Steinefangring 29 anschließt. Insofern entspricht der Steinefänger 10, und zwar insbesondere die Feststoffangtrommel 27, der aus der deutschen Patentanmeldung P 38 20 044.9 bekannten Vorrichtung. Alternativ können der Steinefänger 10 und die Feststoffangtrommel 27 in der aus der DE-PS 33 41 931 bzw. dem DE-GM 85 13 947 bekannten Weise ausgebildet sein, auf die insofern Bezug genommen wird.

Die Waschtrommel 28 ist ebenfalls zylindrisch ausgebildet und mit einer perforierten Mantelfläche versehen. Der Durchmesser der Waschtrommel 48 ist jedoch deutlich geringer als der Durchmesser der Siebtrommel 32 des Steinefängers 10. Zwischen der Siebtrommel 32 am Steinefangring 29 und der Waschtrommel 28 ist hier ein kegelstumpfförmiger Übergangsabschnitt 33 angeordnet, der gegebenenfalls auch über eine gelochte Mantelfläche verfügen kann. Durch diesen Übergangsabschnitt 33 wird ein kontinuierlicher Übergang von der Siebtrommel 32 auf die im Durchmesser kleinere Waschtrommel 28 geschaffen. Somit setzt sich die Aufbereitungstrommel 20 aus vier Abschnitten zusammen, die in Schwemmstromrichtung 14 hintereinanderliegen, und zwar dem Steinefangring 29, der Siebtrommel 32, dem Übergangsabschnitt 33 und der Waschtrommel 28.

Im Inneren des Übergangsabschnitts 33 sind im gezeigten Ausführungsbeispiel (Fig. 1 bis 3) schräggerichtete, vorstehende Schaufeln 34 angeordnet, durch die bei sich drehender Aufbereitungstrommel 20 die Hackfrüchte von der Siebtrommel 32 in die Waschtrommel 28 förderbar sind. Auch die Waschtrommel 28 weist im vorliegenden Ausführungsbeispiel nach innen vorstehende Förderorgane, nämlich eine Förderschnecke 35, auf (Fig. 2). Diese fördert die Hackfrüchte durch die Waschtrommel 28 hindurch zur Austrittsseite 17 der Aufbereitungstrommel 20.

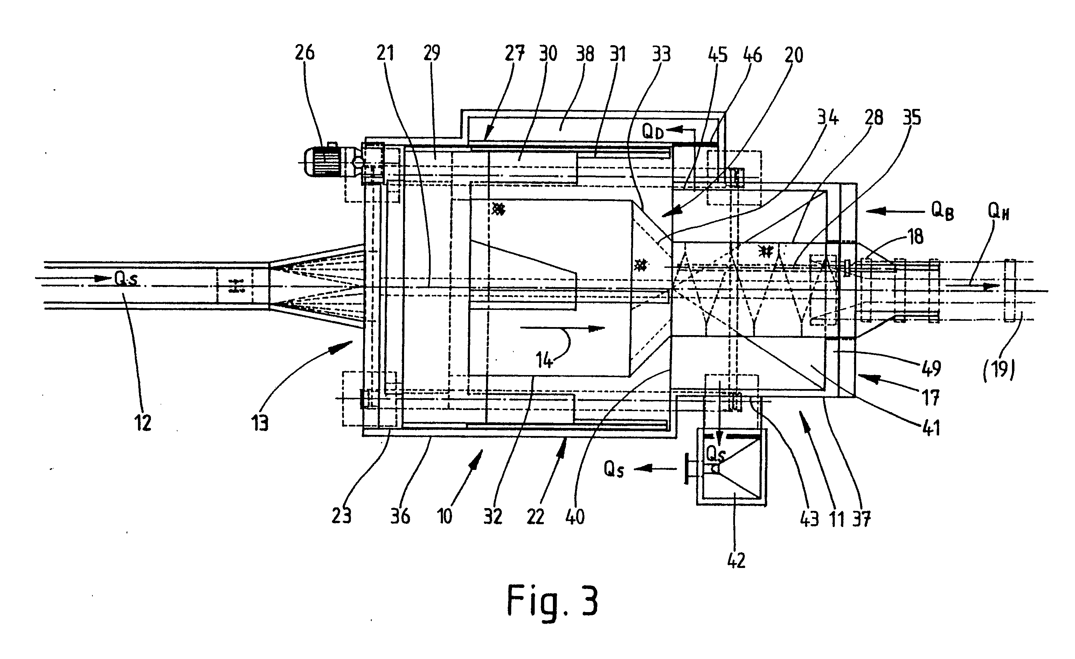

Auch die Wanne 22 ist im vorliegenden Ausführungsbeispiel analog zur Aufbereitungstrommel 20 unterteilt. Sie verfügt über zwei Wannenabschnitte nämlich eine Feststoffwanne 36 und eine in Schwemmstromrichtung 14 dahinterliegende Waschwanne 37. Die Feststoffwanne 36 ist halbzylindrisch ausgebildet und im Durchmesser derart bemessen, daß die Außenflächen der Abstreifer 31 sich an der Innenseite des gewölbten Bodens der Feststoffwanne 36 entlangbewegen zum Abfördern sich in der Feststoffwanne 36 sammelnder feiner Feststoffe, insbesondere Sand oder dergleichen. Diese Bestandteile werden von den Abstreifern 31 am Rand 23 der Feststoffwanne 36 ausgetragen in einen Austragschacht 38, von dem aus die ausgeschiedenen feinen Bestandteile abführbar sind, beispielsweise zu einem nicht gezeigten Dekanteur (Fig. 3). Darüber hinaus ist der Feststoffwanne 36 im Bereich des Steinefangrings 29 eine Austragrutsche 39 zugeordnet zur separaten Abfuhr der im Steinefangring 29 sich sammelnden Steine oder dergleichen (Fig. 2).

Die durch die Trennwand 40 von der Feststoffwanne 36 getrennte Waschwanne 37 ist im Querschnitt kleiner bemessen als die Feststoffwanne 36. Außerdem steigt ein hier teil weise eben ausgebildeter Boden 41 der Waschwanne 37 zur Austrittsseite 17 des Trommelwäschers 11 leicht an (Fig. 2). Auf diese Weise staut sich das in der Waschwanne 37 sammelnde Schwemmwasser und der in der Waschtrommel 28 verbleibende Anteil des dem Trommelwäscher 11 zugeführten sauberen Berieselungswassers im Bereich der Trennwand 40. Einer Seite der Waschwanne 37 ist hier eine in einen Abflußschacht 42 mündende Abflußöffnung 43 zugeordnet. Der Querschnitt der Abflußöffnung 43 ist durch einen beweglichen Drosselschieber 44 derart veränderbar, daß durch die Abflußöffnung 43 pro Zeiteinheit nur eine vorherbestimmte Schwemmwassermenge $Q_s$ in den Abflußschacht 42 gelangen kann (Fig. 2). Vom Abflußschacht 42 gelangt das aus der Waschwanne 37 abgezogene Schwemmwasser über eine nicht gezeigte Rücklaufleitung mit einer ebenfalls nicht dargestellten Umwälzpumpe im Bereich des Kartoffelbunkers 15 wieder in den Schwemmkanal 12. Auf diese Weise entsteht ein geschlossener Schwemmwasserkreislauf.

Weiterhin ist der Waschwanne 37 eine Überlauföffnung 45 zugeordnet, die im gezeigten Ausführungsbeispiel der Abflußöffnung 43 etwa gegenüberliegt. Der untere Rand der Überlauföffnung 45 ist durch einen Schieber 46 wehrartig in der Höhe veränderlich zur Einstellung eines bestimmten zs Schwemmwasserpegels 47 an die Überlauföffnung 45 schließt ein Verbindungskanal 48 zum Austragschacht 38 an.

Die Höhe des Schwemmwasserpegels 47 ist über entsprechende Stellungen des Schiebers 46 an der Überlauföffnung 45 und gegebenenfalls des Drosselschiebers 44 der Abflußöffnung 43 an den Durchmesser der Waschtrommel 28 angepaßt, indem nämlich der Schwemmwasserpegel 47 auf einem Niveau unterhalb der unteren Scheitellinie 48 der Waschtrommel 28 liegt. Auf diese Weise befinden sich die Kartoffeln und die auszuscheidenden Feststoffe im Bereich des Steinefängers 10 im Schwemmwasser zur Durchführung einer Auftriebsabscheidung, während demgegenüber durch die Waschtrommel 28 des Trommelwäschers 11 die zu waschenden Kar toffeln allein hindurchgeführt werden, also ohne Schwemmwasser.

Um zu verhindern, daß ein Teil des Schwemmwassers nicht an der Austrittsseite 17 des Trommelwäschers 11 aus der Waschwanne 37 herausfließt, ist diese mit einer endseitigen Blende 49 versehen. die oberhalb des Schwemmwasserpegels 47 aber unterhalb des Mantels der Waschtrommel 28 endet (Fig. 2).

Die Vorrichtung nach dem zweiten Ausführungsbeispiel der Erfindung (Fig. 4 und 5) unterscheidet sich von der vorstehend geschilderten ersten Ausführungsform der Vorrichtung durch den Übergang zwischen der im Durchmesser größeren Feststoffangtrommel 27 und der im Durchmesser kleineren Waschtrommel 28. Dieser Übergang ist hier stufenförmig ausgebildet, besteht nämlich aus einer in einer vertikalen Ebene liegenden Übergangswandung 50. Die Übergangswandung 50 ist kreisringförmig ausgebildet und verbindet so die Feststoffangtrommel 27 mit der Waschtrommel 28.

Dem stufenförmigen Übergang zwischen der Feststoffangtrommel 27 und der Waschtrommel 28 sind hier mehrere gleichmäßig am Umfang der Feststoffangtrommel 27 angeordnete Schaufeln 51 zugeordnet. Diese ragen ausgehend von der Feststoffangtrommel 27 bereichsweise in die vordere Stirnseite der daran anschließenden Waschtrommel 28 hinein. Die Schaufeln 51 sind mit einer in den Figuren nicht dargestellten Wendelung versehen. Durch diese sind die sich vor den Schaufeln 51 sammelnden Kartoffeln zur Waschtrommel 28 hin förderbar.

Nachfolgend wird das erfindungsgemäße Verfahren anhand der Vorrichtung des ersten Ausführungsbeispiels der Erfindung (Fig. 1 bis 3) näher erläutert:

Aus dem Kartoffelbunker 15 kommend werden die Kartoffeln über das Abzugsband 16 dem Schwemmkanal 12 zugeführt. Im Schwemmkanal fließt Schwemmwasser in Richtung zur Eintrittsseite 13 des Steinefängers 10 der Vorrichtung. Das Schwemmwasser dient dabei als Fördermedium für das Gemisch aus Kartoffeln und Feststoffen wie Steinen, Sand, Kraut etc. Die Schwemmwassermenge $Q_s$ ist derart gewählt, daß sich im Schwemmkanal 12 und in der Vorrichtung ein Schwemmwasserpegel 47 einstellt, der etwa unterhalb der unteren Scheitellinie 48 der Waschtrommel 28 sich befindet, jedoch die Feststoffangtrommel 27 teilweise eingetaucht ist. Aus dem Schwemmwasser werden nach Eintritt in die Vorrichtung zunächst durch den Steinefangring 29 des Steinefängers 10 schwere feste Bestandteile, nämlich Steine etc., ausgeschieden und über die Austragrutsche 39 abgeführt. Die leichteren Kartoffeln. Sand etc. werden im Schwemmwasser schwimmend über den Steinefangring 29 hinweg zur Siebtrommel 32 des Steinefängers 10 gefördert, wo durch die Perforierung des Mantels der Siebtrommel 32 feine Bestandteile, insbesondere Sand abgeschieden werden und über die Abstreifer 31 in den Austragschacht 38 gefördert werden.

Am Ende der Siebtrommel 32 sind im Schwemmwasser im wesentlichen nur noch Kartoffeln enthalten. Diese werden durch die Schaufeln 34 im sich kegelstumpfförmig verjüngenden Übergangsabschnitt 33 aus dem Schwemmwasser herausgehoben in die über dem Schwemmwasserpegel 47 liegende Waschtrommel 28. In dieser werden die Kartoffeln durch die Förderschnecke 35 weitergefördert zur Austrittsseite 17 des Trommelwäschers 11, von wo aus über die Rutsche 18 die so weit von anhaftenden Feststoffen befreiten und gewaschenen Kartoffeln über ein Förderband 19 der Weiterverarbeitung zugeführt werden.

Im Trommelwäscher 11 erfolgt die Hauptwäsche der hierin im wesentlichen nur noch enthaltenen Kartoffeln ohne das Schwemmwasser und Feststoffe durch eine Berieselung mit frischem Wasser. Dazu wird dem Trommelwäscher 11 von der Austrittsseite 17 her über entsprechende Bedüsungsrohre eine Berieselungswassermenge $Q_B$ zugeführt.

Die Schwemmwassermenge $Q_S$ wird im Kreislauf längs des Schwemmkanals 12 und der Vorrichtung geführt, indem durch die Abflußöffnung 43 in der Waschwanne 37 eine bestimmte Schwemmwassermenge $Q_S$, nämlich eine Kreislaufwassermenge, abgeführt und durch eine Rohrleitung zum Anfang des Schwemmkanals 12 im Bereich des Kartoffelbunkers 15 gepumpt wird. Da insoweit durch die Abflußöffnung 43 eine etwa genauso große Schwemmwassermenge $Q_S$ abgeführt wird wie sie am Beginn des Schwemmkanals 12 wieder zugeführt wird, bleibt der Schwemmwasserpegel 47 konstant.

Als Störgröße auf die Schwemmwassermenge $Q_S$ wirkt sich jedoch die Berieselungswassermenge $Q_B$ aus. Diese wird zwar so bemessen, daß sie etwa der mit den gewäschenen Kartoffeln aus dem Trommelwäscher 11 ausgeschiedenen Haftwassermenge $Q_H$ entspricht, doch wird beispielsweise bei stark verschmutzten Kartoffeln eine größere Berieselungswassermenge $Q_B$ benötigt als die Haftwassermenge $Q_H$. Auf diese Weise kommt zur im Kreislauf geführten Schwemmwassermenge $Q_S$ eine Differenzwassermenge $Q_D$ hinzu. Damit diese zu keinem nennenswerten Anstieg des Schwemmwasserpegels 47 führt, aufgrund dessen beispielsweise der untere Teil der Waschtrommel 28 noch in das Schwemmwasser eintauchen könnte, erfolgt die Abfuhr der Differenzwassermenge $Q_D$ durch die Überlauföffnung 45. Dazu ist dessen als Wehr dienender Schieber 46 derart in der Höhe eingestellt, daß er den vorgesehenen Schwemmwasserpegel 47 vorgibt. Die durch die Überlauföffnung 45 abschließende Differenzwassermenge $Q_D$ gelangt im gezeigten Ausführungsbeispiel in den Austragschacht 38 am Steinefänger 10, wo es sich mit den dort ausgeschiedenen feinen Feststoffen (Sand etc.) vermischt und den Abtransport dieser feinen Feststoffe (Sand etc.) in einen Sammelbehälter oder Dekanteur unterstützt. Im Falle des Abtransports des Gemisches aus feinen Feststoffen (Sand etc.) und der Differenzwassermenge $Q_D$ zu einem Dekanteur kann die Differenzwassermenge $Q_D$ aufbereitet und als Teil der Berieselungswassermenge $Q_B$ dem Trommelwäscher 11 zum Waschen der Kartoffeln wieder zugeführt werden.

Das erfindungsgemäße Verfahren läuft bei der Vorrichtung nach dem zweiten Ausführungsbeispiel der Erfindung (Fig. 4 und 5) im wesentlichen nach der vorstehend beschriebenen Weise ab. Der einzige Unterschied zu dem vorstehend beschriebenen Verfahren besteht darin, daß am Ende der als Siebtrommel 32 ausgebildeten Feststoffangtrommel 27 die Kartoffeln durch die gewendelten Schaufeln 51 über den stufenförmigen Absatz zwischen der Feststoffangtrommel 27 und der Waschtrommel 28 aus dem Schwemmwasser herausgehoben und in die Waschtrommel 28 hineingefördert werden. Dieses geschieht derart, daß die sich vor der jeweils untenliegenden Schaufel 51 der Feststoffangtrommel 27 sammelnden Kartoffeln infolge der Drehung der Aufbereitungstrommel 20 aus dem Schwemmstrom herausbewegt und dabei infolge der entsprechenden Wendelung von der jeweiligen Schaufel über die Stufe an der Übergangswandung 50 hinweg längs des in die Waschtrommel 28 ragenden Bereichs der Schaufel 51 in die Waschtrommel 28 transportiert werden.

## Ansprüche

1. Verfahren zum Aufbereiten von Hackfrüchten, wobei aus einem die Hackfrüchte einerseits und mitgeführte Feststoffe andererseits aufweisenden Transportmedium (Schwemmwasser) zunächst größtenteils die Feststoffe ausgeschieden (Feststoffabscheidung) und anschließend die Hackfrüchte endgewaschen werden (Hauptwäsche), **dadurch gekennzeichnet**, daß wenigstens die Hauptwäsche auf einem Niveau oberhalb des Schwemmwasserpegels (47) durchgeführt wird.

2. Verfahren nach Anspruch 1, dadurch gekennzeichnet, daß die Hauptwäsche im wesentlichen oberhalb des Schwemmwasserpegels (47) ohne Schwemmwasser durchgeführt wird.

3. Verfahren nach Anspruch 1 oder 2, dadurch gekennzeichnet, daß im Bereich der Hauptwäsche das bereits von den Hackfrüchten abgezweigte Schwemmwasser abgeführt und im Kreislauf vor die Feststoffabscheidung gepumpt wird.

4. Verfahren nach einem oder mehreren der Ansprüche 1 bis 3, dadurch gekennzeichnet, daß der Hauptwäsche (frisches) Berieselungswasser zugeführt wird, wobei die Berieselungswassermenge ($Q_B$) mindestens der durch die gewaschenen Hackfrüchte aus der Hauptwäsche ausgetragenen Haftwassermenge ($Q_H$) entspricht, vorzugsweise geringfugig größer ist.

5. Verfahren nach einem oder mehreren der Ansprüche 1 bis 4, dadurch gekennzeichnet, daß der Schwemmwasserpegel (47) durch mindestens einen vorzugsweise in der Höhe verstellbaren Überlauf (Überlauföffnung 45) reguliert wird, insbesondere durch den Überlauf (Überlauföffnung 45) eine Differenzwassermenge ($Q_D$), nämlich im wesentlichen die der Hauptwäsche zugeführte Berieselungswassermenge ($Q_B$) abzüglich der Haftwassermenge ($Q_H$), abgeführt wird.

6. Verfahren nach Anspruch 5, dadurch gekennzeichnet, daß die Differenzwassermenge ($Q_D$) den bei der Feststoffabscheidung anfallenden feinen Feststoffen, insbesondere Sand, Fruchtbruchteilen etc. zugeführt wird.

7. Vorrichtung zum Aufbereiten von Hackfrüchten, die zusammen mit Feststoffen (Steine, Kraut, Sand etc.) in Schwemmwasser geführt sind, mit wenigstens einem Abscheiderorgan zum Trennen der Hackfrüchte von den Feststoffen und mit einem Hauptwaschorgan zum wäschen der Hackfrüchte, **dadurch gekennzeichnet**, daß das Hauptwaschorgan (Trommelwäscher 11) gegenüber dem Abscheiderorgan (Steinefänger 10) aus dem Schwemmwasser austaucht.

8. Vorrichtung nach Anspruch 7, dadurch gekennzeichnet, daß das Abscheideorgan (Steinefänger 10) und das Hauptwaschorgan (Trommelwäscher 11) apparativ zusammengefaßt sind, insbesondere wenigstens über eine gemeinsame Aufbereitungstrommel (20) aus einer Feststoffangtrommel (27) und einer in Schwemmstromrichtung (14) dahinterliegende Waschtrommel (28) verfügen, wobei vorzugsweise die Feststoffangtrommel (27) und die Waschtrommel (28) auf einer gemeinsamen, insbesondere horizontalen sich drehenden Längsmittelachse (21) liegen und die Waschtrommel (28) einen kleineren Durchmesser als die Feststoffangtrommel (27) aufweist.

9. Vorrichtung nach Anspruch 8, dadurch gekennzeichnet, daß zwischen der Feststoffangtrommel (27) und der im Durchmesser kleineren Waschtrommel (28) ein kegelstumpfförmiger Übergangsabschnitt (33) oder eine kreisringförmige Übergangswandung (50) angeordnet ist, und vorzugsweise dem Übergangsabschnitt (33) bzw. der Übergangswandung (50) Transportorgane, insbesondere bei sich drehender Aufbereitungstrommel (20), zur Waschtrommel (28) hin fördernde Schaufeln (34, 51), zugeordnet sind.

10. Vorrichtung nach Anspruch 7 sowie einem oder mehreren der weiteren Ansprüche, dadurch gekennzeichnet, daß der Durchmesser der (kleineren) Waschtrommel (28) derart bemessen ist, daß deren tiefste Stelle, nämlich eine untere Scheitellinie (48), geringfügig oberhalb des Schwemmwasserpegels (47) liegt.

11. Vorrichtung nach einem oder mehreren der Ansprüche 9 bis 10, dadurch gekennzeichnet, daß die Aufbereitungstrommel (20) in mindestens einer oben offenen (feststehenden) Wanne (22) drehbar gelagert angeordnet ist, und die Wanne (22) sich vorzugsweise aus einer Feststoffwanne (36) und einer Waschwanne (37) zusammensetzt, die voneinander durch eine Trennwand (40) oder dergleichen getrennt sind.

12. Vorrichtung nach Anspruch 11, dadurch gekennzeichnet, daß ein Boden (41) der Waschwanne (37) gegenüber der Feststoffwanne (36) hochversetzt ist, und vorzugsweise zumindest ein Teilbereich des Bodens (41) der Waschwanne (37) unterhalb des Schwemmwasserpegels (47) liegt.

13. Vorrichtung nach Anspruch 11 oder 12, dadurch gekennzeichnet. daß die Waschwanne (37) mindestens eine Abflußöffnung (43) für das Schwemmwasser aufweist, der vorzugsweise ein verstellbares Stauorgan, insbesondere ein verstellbarer Drosselschieber (44), zugeordnet ist zum Einstellen der im Kreislauf zu führenden Schwemmwassermenge ($Q_S$).

14. Vorrichtung nach Anspruch 13, dadurch gekennzeichnet, daß die Abflußöffnung (43) über eine mit einer Umwälzpumpe versehene Rücklaufleitung mit einer Gutaufgabeseite des Schwemmkanals (12) verbunden ist.

15. Vorrichtung nach einem oder mehreren der Ansprüche 11 bis 14, dadurch gekennzeichnet, daß der Waschwanne (37) mindestens eine Überlauföffnung (45) zugeordnet ist zur Ableitung überschüssigen Wassers aus der Waschwanne (37), der vorzugsweise ein Stauorgan, insbesondere ein verstellbarer Schieber (46), zugeordnet ist zur Einstellung eines bestimmten Schwemmwasserpegels (47).

Fig. 1

EP 0 401 812 A1

Fig. 2

EP 0 401 812 A1

Fig. 3

EP 0 401 812 A1

Fig. 4

Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3717170 (SCHNEIDER) <br> * Spalte 2, Zeile 36 - Spalte 3, Zeile 47; Figur 4 * | 1, 2, 5, 7-10 | A23N12/02 <br> B03B5/56 |
| X | GB-A-414809 (PEEBLES) <br> * Seite 2, Zeile 40 - Seite 3, Zeile 53 * | 1, 2, 4, 5, 7-12, 15 | |
| Y | | 13, 14 | |
| X | FR-A-2080172 (SOC. SUCRIERE DE L'ATLANTIQUE) <br> * Seiten 3 - 4; Figur 1 * | 1-4, 7 | |
| Y | | 13, 14 | |
| A | | 15 | |
| X | FR-A-1127850 (DECAVEL) <br> * Seiten 1 - 2 *, | 1, 2, 7 | |
| X | GB-A-181227 (MATERS) <br> * Seite 2; Figur 1 * | 1, 2, 7 | |
| A | DE-A-3322915 (GERLACH) <br> * Seite 23, Zeile 8 - Seite 25, Zeile 4; Figuren 1-3 * <br> * Seite 29, Zeile 27 - Seite 33, Zeile 13; Figur 16 * | 3-6, 8, 9, 11, 13, 14 | RECHERCHIERTE SACHGEBIETE (Int. Cl.5) <br><br> A23N <br> B03B |
| A | US-A-2091675 (FERRY) <br> * Seite 4, Zeilen 31 - 47 * | 5, 15 | |
| A | FR-A-2014810 (SOC. SUCRIERE DE L'ATLANTIQUE) <br> * Seite 3, Zeile 12 - Seite 6, Zeile 27; Figur 1 * | 11, 13, 14 | |

Der vorliegende Recherchenbericht wurde für alle Patentansprüche erstellt

| Recherchenort | Abschlußdatum der Recherche | Prüfer |
|---|---|---|
| DEN HAAG | 22 AUGUST 1990 | VAN OORSCHOT J.W.M. |